(19) Europäisches Patentamt / European Patent Office / Office européen des brevets

(11) **EP 1 981 236 A1**

(12) **EUROPEAN PATENT APPLICATION**

(43) Date of publication:
**15.10.2008 Bulletin 2008/42**

(51) Int Cl.:
*H04L 27/26* (2006.01)    *H04M 3/30* (2006.01)

(21) Application number: **07290446.9**

(22) Date of filing: **11.04.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (72) Inventor: **Pascal, Jean-Marc**<br>**2800 Mechelen (BE)**<br><br>(74) Representative: **Plas, Axel Ivo Michel et al**<br>**BiiP cvba**<br>**Culliganlaan 1B**<br>**1831 Diegem (Brussels) (BE)** |
| (71) Applicant: **Alcatel Lucent**<br>**75008 Paris (FR)** | |

(54) **A transmit power control module and associated method for transmit power configuration**

(57) A module (101) for controlling the transmit power of a signal transmitter. The output power is determined from a first contribution based on a first set of parameters configured by an operator and a second contribution based on a second set of parameters. The module (101) is able to configure the second set of parameters based on the first set of parameters.

Fig. 1

## Description

### Field of the Invention

The present invention generally relates to the control of transmit power and more particular to configuring control parameters for the Power Spectral Density (PSD) in a digital communications system, such as for instance upstream or downstream communication on a DSL line.

### Background of the invention

An important problem in digital communications is cross-talk between multiple communication lines. Cross-talk is the effect wherein the information transported over a first communication line affects a second, nearby communication line as a result of electromagnetic radiation. The noise induced in the second line may affect the information transported on the second line. A single transmission line in a larger bundle will typically experience crosstalk from all other lines in that bundle. The induced crosstalk will increase with the transmit power or PSD.

The length of the communication line plays an important role in the influence of cross-talk on that line. When a transmitter and a receiver are close together and as such connected by a short line, there will be a small difference between the output power of the transmitter and the power of the signal received at the receiver. However, when transmitter and receiver are far apart, the difference between the transmitted power and the received power increases as a result of larger attenuation on the line. A higher power level of a signal makes it easier for a receiver to detect the transmitted signal amongst noise such as cross-talk. To receive a certain power level on a long communication line, the transmitter will have to send the signal with a high transmit power compared to the situation where such signal is conveyed over a short communication line. As a trade-off, a signal transmitted with high power will generate more cross-talk than a signal transmitted at low power.

A solution to the problem of different line lengths and cross-talk between such lines is found in the Upstream Power Back-Off (UPBO) mechanism currently defined for Very High speed Digital Subscriber Line (VDSL) applications in the International Telecommunication Union (ITU) standard specification G.993.2 entitled "Very high speed digital subscriber line transceivers 2 (VDSL2)" published in February 2006. ITU standard specification G.993.2 describes the operation of UPBO for VDSL2 in section 7.2.1.3.

In general UPBO enables the operator to control the PSD of a VDSL upstream transmitter in such a way that the received signals are of a particular power level, independently of the length of the communication line. This is achieved by specifying a first set of parameters which are used in the upstream transmitter to calculate the output power. In its calculation, the transmitter will take into account the loss caused by the attenuation of the transmission line. However, there will typically be more than two communication lines injecting cross-talk on each other. For instance, a bundle of lines arriving at a central office can contain twenty wires which all affect each other. This means that the crosstalk induced by a single communication line may be unnoticed on another communication line in the same bundle as a result of the aggregate crosstalk induced. Thus, a signal transmitted at a power level calculated on the basis of the operator's desired received PSD may be further increased in power without injecting additional noticeable cross-talk on nearby wires. This insight has led to the development of systems whereon the transmit power contains a second contribution.

A contribution to the European Telecommunication Standards Institute (ETSI) entitled "The Equalized FEXT Upstream Power Cutback Method to Mitigate the Near-Far FEXT Problem in VDSL", published on 24-27 November 1998 in ETSI subcommittee TM06 describes a theoretical method to determine the transmit power on a line in such a way that all lines affect each other approximately equally by equalizing the level of cross talk on each line at the CO side of a connection. A submission to ITU study group 15 entitled "G.VDSL: Introduction of Equalized FEXT UPBO method in VDSL 2", published as Temporary Document SD-030 on 15-19 January 2007 discloses an implementation for VDSL of the above mentioned theoretical method as a method to increase the transmission power of a signal with a second contribution without injecting additional noticeable cross-talk. The method uses the same calculations as those described in ITU G.993.2 to determine the output power of the transmitter to meet the desired received PSD. In addition, it determines the acceptable additional power boost using a second set of parameters such as a comparison of an electrical length of a reference transmission line to the electrical length of the actual transmission line. The electrical length is an estimation of the loop attenuation assuming that all sections of the loop obey a $\sqrt{f}$ attenuation characteristic. More in particular, the electrical length is the attenuation in dB at 1 MHz of an equivalent hypothetical loop with a perfect $\sqrt{f}$ attenuation characteristic. Alternatively, electrical length can be defined as a relation between the physical length of the medium, the propagation time of an electromagnetic signal on the medium and the propagation time of the electromagnetic signal in free space of a distance equal to the physical length.

In the known method, the electrical length of a reference line is configured manually by the operator, whereas the electrical length of the communication line can be measured during initialization. Thus, the operator has to determine the electrical length for the reference line for each situation. Each neighbourhood has a different layout of the network and different lengths of communication lines. As a result, the operator needs a good understanding of how to determine the electrical length of the reference communication line. This requires thorough education of the operators staff which is a costly matter. In addition, any errors made in the configuration of the electrical length of the reference line can lead to instability of a part of a network or an entire network. For instance, a faulty configuration can lead to a large boost in the output power for a particular subset of communication lines e.g. five lines in a bundle of twenty. This leads to an increased amount of aoss-talk on the remaining fifteen lines in that bundle, interfering with the signals thereon. Faulty configuration may even be used by a malicious operator to boost its own customers and reduce the service for users of different operators. This may occur for instance in a situation where two separate operators serve the same neighbourhood. The communication lines from the users to the operator will generally be bundled over at least part of the distance between each users premises and the central location. If either of the operators configures their electrical length for the reference line in such a way that the output power is increased significantly, they can disturb the service of the other operator.

It is an objective of the present invention to overcome the above described problems of the prior art solutions and to provide a transmit power control module which relies less on operator interaction and reduces the chance for faulty configuration.

## Summary of the Invention

According to the present invention, the above objectives are realized by a transmit power control module for controlling a transmit power of a signal in a signal transmitter, comprising means for determining a first contribution to the transmit power based on a first set of one or more parameters and means for determining a second contribution to the transmit power based on a second set of one or more parameters characterized in that the transmit power control module further comprises means to automatically configure the second set of one or more parameters from the first set of one or more parameters.

Indeed, automatic configuration of the second set of parameters removes the need for the operator to analyze the overall noise environment and to determine the optimal values for the parameters of the second set. As a consequence, configuration of the transmit power in a single piece of equipment such as a CPE or DSLAM will be executed faster. Whereas the operator would have to analyse all the information, make the calculations and set the parameters manually for each piece of equipment, an automatic calculation on the basis of the first set of parameters or a subset thereof through a piece of hardware or a software algorithm removes the need for operator intervention. In addition, automatic configuration also removes the chance for faulty or malicious configuration by an operator. Small variations in the parameter value setting for transmit power control may lead to large consequences such as instability of the network or a large increase in injected noise in nearby lines. The risk for such problems is also mitigated via the automatic configuration according to the current invention.

The first contribution to the transmit power relates to the desired received power, being the power that should be received at the other end of the communication line connected to the signal transmitter. This contribution is generally configured based on parameters that are known to the operator or defined by the operator according to well known techniques such as those described in the ITU G.993.2 standard specification. The second contribution is related to an additional transmit power boost that is acceptable taking into account the overall noise or crosstalk level resulting from all lines. The second contribution is defined by the second set of parameters.

The parameters for the first contribution can set a fixed transmit power for a single carrier or multiple carriers. Alternatively, the first set of parameters may determine the transmit power for each carrier independently or define a frequency dependant transmit power function such as a Power Spectral Density (PSD). The first contribution may include the loss of power due to attenuation as a fixed value, for instance based on the average length of the communication lines or as a dynamic value based on the actual length of a communication line and the characteristic attenuation of the material where the line is composed of. The loss over the line may be defined for a single carrier, a single value for multiple carriers or a separately determined value for each carrier or frequency. The first set of parameters is further used to calculate values for the second set of parameters.

Optionally, the first set of one or more parameters used by the transmit power control module may comprise two parameters X and Y whose values are configurable by an operator of a network where the signal transmitter forms part of.

The parameters X and Y may for instance define a frequency dependant transmit power or PSD. For instance, in an xDSL network, these parameters are defined in the standard specifications for general upstream power back-off operation. The parameters X and Y correspond to the parameters a and b in the VDSL specification ITU G.993.2. The parameters X and Y are operator configurable through an operator interface and may be capped with a minimum and/or maximum depending on the system wherein the transmit power control module is used.

Optionally, the transmit power may correspond to a power spectral density and the means for determining the first contribution are adapted to calculate the first contribution $PSD_1$ to the power spectral density for a particular frequency f of the signal according to the formula $PSD_1(f) = -X - Y \cdot \sqrt{f}$.

The power spectral density (PSD) describes output power of a multi carrier signal such as xDSL signal obtained through Discrete Multitone (DMT) modulation as a function of the carrier frequency f. In line with the existing VDSL standard the first contribution to the transmit power may be calculated according to the formula $PSD_1(f) = -X - Y \cdot \sqrt{f}$. This formula ensures backwards compatibility with the existing xDSL technology, and enables the operator to set the transmit power by configuring two parameters X and Y he is already familiar with.

Optionally, the transmit power control module according to the present invention may comprise a parameter Z representative for an electrical length of a reference transmission line wherein the signal transmitter induces noise.

A typical transmission network contains transmission lines of various lengths. Some lines will be too short to support any additional transmit power boost, e.g. the additional boost would lead to a powerful noise induction in nearby lines rendering them unusable. Therefore the operator may determine a reference line and the characteristics thereof. The characteristics of the reference line can then be used to determine a transmission power boost in relation to the overall noise experienced by the average transmission line in the network. This allows an operator or a transmitter to determine a boost taking into consideration the reference line and thus determine a boost which suits all the lines in the network.

Alternatively, the parameter Z can be representative for an electrical length of a reference transmission line inducing noise in the transmission line connected to the signal transmitter. This way, the boost can be determined in relation to the average noise induced by the average line in the communication network.

A further option of the current invention is that the transmit power module (101) according to claim 2 and 4, characterized in that said means to automatically configure the second set of parameters may be adapted to configure the parameter Z according to the formula

$$Z = \frac{PSD(f) + X}{\sqrt{f}} + Y,$$

wherein PSD(f) represents a power spectral density for a particular frequency f of the signal.

Indeed, the transmit power can be determined using a formula $PSD(f) \leq -X - Y\sqrt{f} + LOSS(Z,f)$ which preferably holds true for every value of f, wherein PSD(f) is the output power at a given frequency f, X and Y are parameters used to determine the first contribution to the transmit power which are known at the time of calculation and LOSS(Z, f) is the line attenuation for a reference line at the given frequency f. The formula can be used to calculate a Z value for each frequency used in a signal, or a selection of frequencies in a signal. For instance, in a multi carrier signal, each carrier may have its own Z value or there can be a single Z value for all the carriers. In a single carrier signal, the Z value can be calculated based on a frequency used for the carrier such as the lower boundary of the frequency band making up the carrier. The calculated PSD(f) is smaller or equal to ensure that the emitted power is lower then or equal to the desired received power at the receiver. LOSS(Z, f) can be defined as $LOSS(Z, f) = Z \cdot \sqrt{f}$. As a result, the output power can be defined as $PSD(f) \leq -X - Y\sqrt{f} + Z \cdot \sqrt{f}$. This formula can be rewritten to a specification for Z:

$$Z \geq \frac{PSD(f) + X}{\sqrt{f}} + Y.$$ Because the output power PSD(f) is related to the frequency, and is constant or decreasing with increasing frequency values, Z can be calculated determined for a minimum frequency such as the lowest frequency used in a communication network or the lower boundary of a frequency band which leads to the formula $$Z = \frac{PSD(f) + X}{\sqrt{f}} + Y.$$ Higher frequency will obtain a lower output value from PSD(f) and will therefore be smaller than the value obtained at the lowest frequency.

Optionally, the means for determining the second contribution in an embodiment of the transmit power control module according to the present invention may be adapted to calcuate the second contribution $PSD_2$ to the power spectral density for an electrical length L of a transmission line connected to the signal transmitter according to the formula $$PSD_2 = 10 \log_{10}\left(\frac{Z}{L}\right).$$

The second contribution calculated according to this formula offers a boost to the transmit power which is acceptable In respect to the other nearby transmission lines.

Optionally, the transmit power control module according to the present invention may comprise means to deactivate automatic configuration of the second set of one or more parameters and to activate manual configuration of the second set of one or more parameters.

Indeed, an operator may want to disable automatic configuration, for instance to perform tests on a line, set a different value for automatically configured parameters due to sudden changes in conditions or because the operator has the knowledge to manually determine the optimal parameters. Additionally, a network may have various types of nodes such as nodes that support UPBO with the additional boost and nodes that do not support the boost in transmit power. In such case it can be beneficial to the operator to deactivate automatic configuration for nodes that do no support a boost.

Optionally, the transmit power control module according to the present invention can be incorporated in a Digital Subscriber Line (DSL) transmitter.

A DSL transmitter can be incorporated in Customer Premises Equipment (CPE) such as an xDSL modem, an xDSL router or in DSL equipment at the operators side such as a Digital Subscriber Line Access Multiplexer (DSLAM), a remote unit (RU), a neighbouring unit (NU), a mini-DSLAM, a Digital Loop Carrier (DLC), etc. located at a Central Office (CO) or a road-side cabinet. By incorporating the transmit power control module in a CPE, the operator can ensure that the power of each received signal is within the desired limits to achieve optimal communication with less cross-talk. Additional, the transmit power control module of the present invention supports the UPBO feature as currently defined in xDSL standard specifications. Therefore it can be an enhancement of existing technology which does not violate backwards compatibility with existing equipment.

Optionally, the transmit power control module according to the present invention can be incorporated in a network management platform.

This way the operator can organize network management from a central location, based on an overview of a partial or complete network. The network management platform can be adapted to allow the choice of automatic and/or manual configuration of the transmit power control module, set boundaries for parameters such as those used to determine the first contribution or even set fixed values for particular parameters. The network management platform may also allow an operator to configure transmitters of an individual user, a part of an area, all users in a particular area or all transmitters connected to a given DSLAM or other piece of DSL equipment located at the CO.

The objectives of the present invention are further realized by a method for controlling a transmit power of a signal in a signal transmitter, the method comprising the steps of:

- determining a first contribution to the transmit power based on a first set of one or more parameters; and
- determining a second contribution to the transmit power based on a second set of one or more parameters;

characterized in that the method further comprises automatically configuring the second set of one or more parameters from the first set of one or more parameters.

The method first establishes the basic output power or transmit power of the transmitter based on a first set of parameters. Optionally the transmitter takes line attenuation into account when determining this first contribution. This way, the transmitter can generate a signal which is of a power level that is acceptable for the receiver and which avoids excessive noise injection on nearby communication lines.

The method then involves generating a boost or second contribution to the transmit power which alters the output power in such a way that the signal becomes stronger without injecting additional noise or at least without causing additional problems on nearby communication lines.

The method optimizes the configuration of the boost by calculating the configuration parameters for the boost automatically with respect to the parameters of the first contribution. This way, no human interaction is required to configure the boost, which avolds abuse or configuration errors that may reduce the stability of a network, part of a network or a particular user or group of users such as a particular operator using the network.

## Brief Description of the Drawings

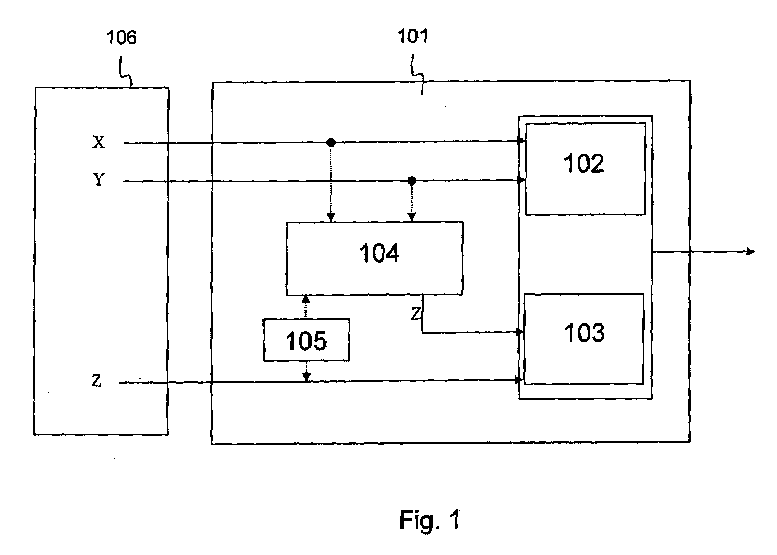

Fig. 1 illustrates a functional block diagram of an embodiment of a transmit power control module 101 according to the present invention.

## Detailed Description of Embodiement(s)

Figure 1 shows a transmit power control module 101 and a configuration interface 106 connected thereto. In this particular embodiment, the transmit power control module 101 is incorporated in a VDSL modem connected to a DSLAM at the central office and the configuration interface 106 is part of the operators network management platform, In a typical setup, the operator will determine the values for parameters X and Y for each user or group of users according to the VDSL standard specification and configure these values via the configuration interface 106. When a user tums his VDSL modem on, the parameters X and Y are transmitted to the modem. The VDSL modem will use the values of X and Y for calculating the transmit power for upstream transmission.

Calculation element 102 will receive the values for X and Y and determine a first contribution to the output power according to the formula $PSD_1(f) = -X - Y \cdot \sqrt{f}$. The calculation element 102 can use an attenuation measurement to determine the line loss and add an amount of power to the first contribution that compensates for the line loss. Thus, the contribution to the transmit PSD resulting from catenation element 102 may equal $PSD_1(f) = -X - Y \cdot \sqrt{f} + Attenuation(f)$. Alternatively, the modem may inform the DSLAM of the measured attenuation and enable the DSLAM to take corrective measures for the line attenuation.

Simultaneously, calculation unit 104 calculates the value for parameter Z which is used by calculation unit 103 to determine the second contribution to the PSD. Calculation element 103 determines a boost for the transmit power that is added to the PSD contribution calculated by element 102 to generate the PSD control signal that is used to control the upstream transmitter. The boost in transmit power is calculated with respect to the characteristics of a reference line and the physical line connecting a particular modem to the DSLAM. The parameter Z is one of the characteristics of the reference line and more in particular corresponds to the electrical length of the reference line. The calculation element 103 determines the boost according to the formula

$$PSD_2 = 10\log_{10}\left(\frac{Z}{L}\right).$$ The total transmit power to be emitted by the transmitter is then the sum of the first contribution calculated by calculation element 102 and the second contribution calculated by calculation element 103, i.e. power source 103, $PSD_1$ + Attenuation(f) + $PSD_2$.

Module 101 will calculate the value of parameter Z based on the values for X and Y automatically. The transmit power control module 101 is therefore provided with a software or hardware module 104 which receives the parameters X and Y and an output connected to calculation element 103 to provide the latter element 103 with the parameter Z value. In this particular embodiment, the module 104 uses the formula

$$Z = \frac{PSD(f) + X}{\sqrt{f}} + Y .$$ The module 104 will generate a different value for Z for each frequency band by using the frequency of the lower boundary of the band as a value for f. Alternatively, the module 104 may use a variant formula for Z which also has a threshold value, used as boundary. For instance, the formula

$$Z = \max\left(\frac{PSD(f) - 3.5 + X}{\sqrt{f}} + Y, 1.8\right)$$ calculates Z as the highest value from either the formula

$$\frac{PSD(f) - 3.5 + X}{\sqrt{f}} + Y$$ or 1.8.

The transmit power control module 101 as illustrated in Fig. 1 further includes an automatic configuration activation module 105. This module is optional and can be added in situations where the transmit power control module 101 has to be configured manually. The automatic configuration activation module 105 will typically enable automatic configuration of parameter Z by default and offer manual configuration as an optional feature, It can deactivate module 104 to stop calculating parameter Z and activate manual configuration of parameter Z through the configuration interface 106. Although the automatic configuration activation module 105 is shown as a separate module, it may be integrated into the module 104, the configuration interface 106 or the calculation element 103. The latter calculation element 103, the module 104 and calculating element 102 may all form part of a software controlled processor, an ASIC, a microprocessor, etc. or may be realized in hardware through discrete logic.

It should be noted that the configuration interface 106 can be part of a network management platform of the operator but alternatively it can be a web based configuration interface provided by a modem, router or DSLAM. In another alternative embodiment, the configuration interface 106 can be a command line interface that can be used to configure a CPE or other DSL equipment such as a DSLAM, mini-DSLAM, RU, NU, DLC, etc. Although the embodiment describes the present invention as incorporated in a DSL modem, it may as well be incorporated in a DSL router, wireless router or access point or operator DSL equipment such as a DSLAM.

It is important to realize that if a signal is modulated on a single carrier or frequency, the transmit power can be a single value representing the emitted power of that signal. In case a signal is modulated on multiple carriers or frequencies such as is the case with Discrete Multitone (DMT) modulation or Orthogonal Frequency Division Multiplexing (OFOM), the transmit power can either be a single value that is used for all of the carriers or a set of values specific for each carrier or frequency or a Power Spectral Density (PSD).

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A transmit power control module (101) for controlling a transmit power of a signal in a signal transmitter, said transmit power control module comprising:

- means for determining a first contribution (102) to said transmit power based on a first set of one or more parameters (X, Y); and
- means for determining a second contribution (103) to said transmit power based on a second set of one or more parameters (Z);

**characterized in that** said transmit power control module further comprises means to automatically configure said second set (104) of one or more parameters (Z) from said first set of one or more parameters (X,Y).

2. The transmit power control module (101) according to claim 1, **characterized in that** said first set comprises two parameters X and Y whose values are configurable by an operator of a network where said signal transmitter forms part of.

3. The transmit power control module (101) according to claim 2, **characterized in that** said transmit power corresponds to a power spectral density and said means for determining said first contribution (102) are adapted to calculate said first contribution $PSD_1$ to said power spectral density for a particular frequency f of said signal according to the formula $PSD_1(f) = -X - Y \cdot \sqrt{f}$.

4. The transmit power control module (101) according to claim 1, **characterized in that** said second set of parameters comprises a parameter Z representative for an electrical length of a reference transmission line wherein said signal transmitter induces noise.

5. The transmit power control module (101) according to claim 2 and 4, **characterized in that** said means to automatically configure said second set are adapted to configure said parameter Z (104) according to

the formula $Z = \dfrac{PSD(f) + X}{\sqrt{f}} + Y$, wherein PSD(f) represents a power spectral density for said particular frequency f of said signal.

6. The transmit power control module (101) according to claim 5, **characterized in that** said means for determining said second contribution (103) are adapted to calculate said second contribution $PSD_2$ to said power spectral density for an electrical length L of a transmission line connected to said signal transmitter according to the formula

$$PSD_2 = 10 \log_{10}\left(\frac{Z}{L}\right).$$

7. The transmit power control module (101) according to claim 1, **characterized in that** said transmit power control module (101) comprises means to deactivate automatic configuration (105) of said second set of one or more parameters and to activate manual configuration of said second set of one or more parameters.

8. The transmit power control module (101) according to claim 1, **characterized in that** said module (101) is incorporated in a Digital Subscriber Line (DSL) transmitter.

9. The transmit power control module (101) according to claim 1, **characterized in that** said module (101) is incorporated in a network management platform.

10. A method for controlling a transmit power of a signal in a signal transmitter, said method comprising the steps of:

- determining a first contribution to said transmit power based on a first set of one or more parameters (X, Y); and
- determining a second contribution to said transmit power based on a second set of one or more parameters (Z);

**characterized in that** the method further comprises automatically configuring said second set of one or more parameters (Z) from said first set of one or more parameters.

Fig. 1

European Patent Office

**EUROPEAN SEARCH REPORT**

Application Number

EP 07 29 0446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MUGGENTHALER P., LÖFFELHOLZ M.: "Upstream Power back off Enhancement" ETSI TM6 MEETING #43, no. 063t39, 11 September 2006 (2006-09-11), - 14 September 2006 (2006-09-14) pages 1-8, XP002452246 Sophia Antipolis, FR * paragraphs [0003], [0004] * | 1-3,7-10 | INV. H04L27/26 H04M3/30 |
| A | SIGURD SCHELSTRAETE: "Defining Upstream Power Backoff for VDSL" IEEE JOURNAL ON SELECTED AREAS IN COMMUNICATIONS, IEEE SERVICE CENTER, PISCATAWAY, US, vol. 20, no. 5, June 2002 (2002-06), XP011065502 ISSN: 0733-8716 * paragraph [III.D] * | 1-10 | |
| A | US 6 922 448 B1 (JACOBSEN KRISTA S [US] ET AL) 26 July 2005 (2005-07-26) * column 4, line 26 - column 6, line 2 * * column 10, line 10 - line 61 * | 1-10 | TECHNICAL FIELDS SEARCHED (IPC) H04L H04M |
| A | US 2003/108191 A1 (KERPEZ KENNETH JAMES [US]) 12 June 2003 (2003-06-12) * paragraph [0032] - paragraph [0034]; figure 13 * | 1-10 | |

The present search report has been drawn up for all claims

| Place of search | Date of completion of the search | Examiner |
|---|---|---|
| Munich | 25 September 2007 | Giglietto, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 29 0446

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2007

| Patent document cited in search report | | | Publication date | Patent family member(s) | Publication date |
|---|---|---|---|---|---|
| US 6922448 | | B1 | 26-07-2005 | NONE | |
| US 2003108191 | | A1 | 12-06-2003 | NONE | |

For more details about this annex : see Official Journal of the European Patent Office, No. 12/82